# EUROPEAN PATENT APPLICATION

(11) **EP 0 969 110 A2**
(43) Date of publication of application: **05.01.2000**
(21) Application number: 99111188.1
(22) Date of filing: 09.06.1999
(51) Int. Cl.: C22C 19/00, H01M 4/38

(54) **Hydrogen occluding alloy**

(30) Priority: 16.06.1998 JP 16812798
(71) Applicant: MITSUBISHI MATERIALS CORPORATION, Chiyoda-ku, Tokyo (JP)
(72) Inventor: Kita, Kouichi, c/o Mitsubishi Materials Corp., Tokyo (JP); Sugahara, Katsuo, c/o Mitsubishi Materials Corp., Tokyo (JP); Wada, Masahiro, c/o Mitsubishi Materials Corp., Tokyo (JP); Murai, Takuya, c/o Mitsubishi Materials Corp., Tokyo (JP); Isobe, Takeshi, c/o Mitsubishi Materials Corp., Tokyo (JP)
(74) Representative: Türk - Gille - Hrabal - Struck

(57) **Abstract**

Summary

Object

To provide a hydrogen occluding alloy having high electric discharge characteristics when it is practically used as a negative electrode of a battery.

Means for Dissolving the object

A Ni-based hydrogen occluding alloy having a composition comprising, by weight %, 32 to 38 % of rare earth elements essentially consisting La and /or Ce, 0.1 to 17 % of Co, 0.1 to 3.5 % of Al, 0.5 to 10 % of Mn, 0.005 to 0.1 % of hydrogen and the balance being Ni and unavoidable impurities; wherein the alloy has a microstructure characterized a phase having a Ce₂Ni₇-type crystal structure and rare earth element hydride are dispersively distributed in a matrix having a CaCu₅-type crystal structure, in a ratio to occupy in the whole organization, a ratio of said phase having a Ce₂Ni₇ type crystal structure is 1 to 40% and that of said rare earth element hydride is 0.5 to 20% by area.

## Description

### Industrial Field of the Invention

The present invention relates to a hydrogen occluding alloy exhibiting high electric discharge characteristics ( high output characteristics) in practical use for a battery cathode, in particular.

### Description of the related Art

Conventionally, in use for a battery cathode, for example, as a hydrogen occluding alloy in which characteristics of hydrogen absorption and desorption rates and initial activation of said battery were improved by action of rare earth element hydride which is dispersively distributed in a matrix having a CaCu₅-type crystal structure, a Ni based hydrogen occluding alloy which was mentioned in Japanese Patent Laid-Open Nos.25528/1998 is known, that is having a composition comprising, by weight % (hereinafter "%" indicates "weight %"),
32 to 38% of rare earth elements essentially consisting of La and /or Ce,
0.1 to 17% of Co, 0.5 to 3.5% of Al,
0.5 to 10% of Mn, 0.005 to 0.5% of hydrogen and
the balance being Ni and unavoidable impurities,
wherein said alloy has a microstructure characterized in that rare earth element hydride is dispersively distributed in a matrix having a CaCu₅-type crystal structure in a ratio of 0.5 to 20% by area.

In addition, the hydrogen occluding alloy above is typically made by preparing a molten alloy having a given composition and casting it into an ingot. When putting it to practical use as a battery cathode, for example, the ingot above is subjected to temper annealing in a vacuum or nonoxidizing inert gas atmosphere at a given temperature between 900 and 1050°C for a given time period, if necessary. Moreover, the as-cast or temper-annealed ingot above is subjected to hydrogenation heat treatment in a hydrogen atmosphere at given temperature between 600 and 950°C for given time period to make rare earth element hydride and have a microstructure characterized in that rare earth element is dispersively distributed in a matrix having a CaCu₅-type crystal structure. Consequently, the hydrogenation ingot above is mechanically pulverized to a predetermined particle size or pulverized by a hydrogenation process under a pressurized hydrogen atmosphere which includes hydrogen absorption at a given hot temperature between 10 and 200°C and hydrogen desorption by vacuum evacuation.

In addition, when the hydrogen occluding alloy is applied to, for example, a battery cathode, the battery can serve a practical use after an initial activation treatment in a pressurized hydrogen atmosphere for a given time period until the cathode including the hydrogen occluding alloy has a sufficient discharge capacity at an initial stage of use.

### Problems to be Solved by the Invention

On the other hand, There recently have been done a lot of trials to apply a hydrogen occluding alloy to a battery cathode which is required larger output in such use of electric tools, electric assisted bicycles and electric automobiles. However, the hydrogen occluding alloy above and other alloys can not be practically used now as a battery cathode since the enough output ( high electric discharge characteristics ) of said battery can not be obtained.

### Means for Solving the Problems

In viewpoint of the above, the present inventors studied to develop a hydrogen occluding alloy by which high output of a battery above is made possible in practical use of a battery cathode, and especially aimed the hydrogen occluding alloy above which has high hydrogen absorption and desorption rates and initial activation characteristics. As a result, the following conclusion was obtained: When the conventional hydrogen occluding alloy of the as-cast or temper-annealed ingot above is subjected to hydrogenation heat treatment to make rare earth element hydride, if heating from room temperature to a given temperature between 200 and 400°C is done in vacuum or inert gas atmosphere and subsequently the hydrogenation heat treatment is done at a given temperature between 400 and 1000°C for a given time period in a hydrogen atmosphere and cooled, the formation of rare earth element hydride is done in microstructure in that a phase having a Ce₂Ni₇-type crystal structure is dispersively distributed in a matrix having a CaCu₅-type crystal structure. As a result, after these heat treatment above, the alloy has a microstructure characterized in that a phase having a Ce₂Ni₇-type crystal structure and rare earth element hydride are dispersively distributed in a matrix having a CaCu₅-type crystal structure. In addition, when the alloy above having a microstructure in which, in a ratio to occupy in the whole organization, a ratio of a phase having a Ce₂Ni₇-type crystal structure is 1 to 40% and that of rare earth element hydride is 0.5 to 20% by area which were accomplished by controlling the condition of heating and hydrogenation heat treatment above, was used as a battery cathode ,output of said battery becomes very high by the existence of said Ce₂Ni₇-type crystal structure. Moreover, high rate of hydrogen absorption and desorption is obtained and initial activation characteristics is significantly promoted by rare earth element hydride above.

The present invention was achieved based on the results set forth above, and characterized by a Ni-based hydrogen occluding alloy having a composition comprising,
32 to 38% of rare earth elements essentially consisting of La and /orCe,
0.1 to 17% of Co, 0.1 to 3.5% of Al,
0.5 to 10% of Mn, 0.005 to 0.1% of hydrogen and
the balance being Ni and unavoidable impurities,
wherein said alloy has a microstructure characterized in that a phase having a Ce₂Ni₇-type crystal structure and rare earth element hydride are dispersively distributed in a matrix having a CaCu₅-type crystal structure and, in a ratio to occupy in the whole organization, a ratio of said phase having a Ce₂Ni₇-type crystal structure is 1 to 40% by area and that of said rare earth element hydride is 0.5 to 20% by area. When the alloy above is practically used for a battery cathode, it becomes possible to exhibit high electric discharge characteristics ( high output characteristics ) of said battery.

The grounds for the choice of the composition of the Ni-based hydrogen occluding alloy and the rates of a phase of a Ce₂Ni₇-type crystal structure and the rare earth element hydride according to the present invention will now be described.

### (a) Rare earth elements essentially consisting of La and Ce

These rare earth elements form a matrix of a CaCu₅ type crystal structure with exhibiting hydrogen occlusion effects with Ni, and form rare earth element hydride which contributes to increase hydrogen charge and discharge rates and improved initial activation, and form a phase of a Ce₂Ni₇ crystal structure which contributes high electric discharge characteristics of a battery. Since discharge capacity decreases when the content is less than 32 % or over 38 %, the content is determined to 32 to 38 % and more preferably 33 to 35 %.

### (b) Co

The Co component is dissolved into the matrix and has effects which reduce volume expansion/shrinkage during hydrogen absorption/desorption, prevent pulverization of the alloy and prolong its usable life. When the Co content is less than 0.1 %, these described effects cannot be achieved. Whereas, when the content is over 17 %, the discharge capacity and initial activation effect tend to decrease. Accordingly, the content is preferably determined to 0.1 to 17 % and more preferably to 6 to 12 %.

### (c) Al

The Al component is dissolved into the matrix and improves corrosion resistance of the alloy. When the content is less than 0.1 %, the desired corrosion effects cannot be achieved. On the other hand, when the content exceeds 3.5 %, the discharge capacity decreases. Therefore, the content is determined to 0.1 to 3.5 %, and preferably 1 to 2 %.

### (d) Mn

The Mn component is dissolved into the matrix and decreases the equilibrium pressure for dissociation hydrogen, and contributes to increase discharge capacity. When the content is less than 0.5 %, a desired increase in discharge capacity cannot be achieved, whereas a content over 10 % tends to decrease discharge capacity. Thus, the content is determined to 0.5 to 10 %, and preferably 3 to 8 %.

### (e) Hydrogen and Rare Earth Element Hydride

Hydrogen predominantly bonds to rare earth elements by thermal hydrogenation at a high temperature to form rare earth element hydride which contributes to hydrogen absorption and desorption rates and improved initial activation. When the content is less than 0.005%, the ratio of rare earth element hydride above is less than 0.5 % by area, and thus the desired effects cannot be achieved. Whereas a content exceeding 0.1 % forms rare earth element hydride at a ratio over 20 % by area and, as a result, discharge capacity drastically decreases because the ratio of a phase of CaCu₅ type crystal structure relatively lowers too much. Therefore, the content is determined to 0.005 to 0.1 % and most preferably 0.01 to 0.05 % so that the resulting ratio of rare earth element hydride finely distributed in the matrix is 0.5 to 20 % by area and more preferably 0.7 to 10 % by area.

### (f) A phase of Ce₂Ni₇ type crystal structure

By the existence of this phase, the higher output becomes possible in application of a battery cathode. When the ratio of this phase is less than 1 % by area, the desired high output cannot be achieved. Whereas a ratio exceeding 40 % by area relatively decreases a phase of CaCu₅ type crystal structure and reduces the discharge capacity. Therefore, the content is determined to 1 to 40 % by area and more preferably 5 to 20 % by area.

### Embodiment

The hydrogen occluding alloy in accordance with the present invention will now be described in further detail with reference to an exemplifying embodiment.

Ni, La, Ce, Co, Al and Mn, as well as a misch metal, as raw materials, each preferably having a purity not less than 99.9 % were melted in a vacuum (e.g. in an ordinary high-frequency induction furnace) to prepare a Ni base molten alloy having a given composition and casted into a cooled ( e.g. water-cooled) casting mold (e.g. a copper casting mold) to form an ingot. The ingot was temper-annealed at predetermined temperature within the range from 850°C to 1050°C for 10 hours in vacuum. Subsequently when a hydrogenation annealing was done on the ingot above, heating from room temperature to a predetermined temperature within the range from 120°C to 400°C was done in vacuum condition of 10⁻³Torr to form an alloy having a microstructure characterized in that a phase having a Ce₂Ni₇ type crystal structure is dispersively distributed in a matrix having a CaCu₅ type crystal structure. Sequentially, after changing the vacuum condition above to a pressurized hydrogen atmosphere condition of a predetermined atmosphere within a range from 1.1 to 10 bar, the alloy above was heated continuously in this condition to a predetermined temperature within a range from 400°C to 1000°C and held at this temperature for 1hour and cooled to a temperature 300°C or less, so that hydrogenation heat treatment was achieved. After this hydrogenation heat treatment, the alloy above has a microstructure characterized that a phase having a Ce₂Ni₇-type crystal structure and rare earth element hydride were dispersively distributed in a matrix having a CaCu₅-type crystal structure. Moreover, the alloy above was hydrogenation pulverized to become a powder having a particle size of 0.074 mm ( 200 mesh ) or less by hydrogen absorption at predetermined temperature within a range between 10°C to 200°C in the cooling process above and hydrogen desorption in vacuum exhausting after the cooling process.

Hydrogen occluding alloys 1 through 21 in accordance with the present invention (hereinafter referred to as alloy(s) of the present invention) each having a composition set forth in Table 1 through 2 in such a way.

For comparison, a conventional hydrogen occluding alloy (hereinafter called a "conventional alloy") having a composition shown in Table 2 was prepared under the same condition as those for the alloys for the present invention, except that the hydrogenation heat treatment after temper-annealing in which heating from room temperature to 850°C, holding 1 hour at 850°C and cooling were done under pressurized hydrogen atmosphere at 1.1 bar.

Microstructures of the resulting hydrogen occluding alloys were observed by a transmission electron microscopy at a magnification of 50,000 and were measured by an electron diffraction analysis. The alloy 1 through 21 of the present invention have a microstructure in which a phase having a Ce₂Ni₇-type crystal structure and rare earth element hydride are dispersively distributed in a matrix of a CaCu₅-type crystal structure. On the one hand, the conventional alloy had a microstructure in which rare earth element hydride is only dispersively distributed in a matrix of a CaCu₅-type crystal structure. The ratio of area (% by area) of a phase having a Ce₂Ni₇-type crystal structure and rare earth element hydride were measured and shown in Table 1 and 2.

Next, the initial activation characteristics and the high electric discharge characteristics (high out-put characteristics) of each of alloys 1 through 21 of the present invention above and conventional alloy were evaluated as follows:

### (1) Evaluation of the initial activation characteristic

Cuprous oxide (Cu₂O) as a conductive agent, polytetrafluoroethylene (PTFE) as a binder and carboxymethyl cellulose (CMC) as a thickener were added to each of alloys 1 though 21 of the present invention and the conventional alloy, and the resulting paste was loaded on a commercially available foamed nickel plate having a porosity of 95%. The foamed nickel plate was dried and pressed, and shaped into a cut plate of 30 mm by 40 mm having a thickness of 0.40 to 0.43 mm. The amount of loaded active material was approximately 1.8 g. A nickel thin plate as a lead was welded to a side of the cut plate to form an negative electrode. On the other hand, a positive electrode was formed by preparing a past from Ni(OH)₂ as an active material, cobalt monoxide (CoO) as a conductive agent, polytetrafluoroethylene (PTFE) as a binder and carboxymethyl cellulose (CMC) as a thickener; loading the past on the foamed nickel plate; drying, pressing and shaping the foamed nickel plate into a cut plate of 30 mm by 40 mm having a thickness of 0.71 to 0.73 mm; and welding the nickel thin plate to a side of the cut plate. The positive electrodes were provided on both sides of the negative electrode through separators made of a polypropylene/polyethylene copolymer, and protection plates made of polyvinyl chloride were integrated therewith at both side of the positive electrodes so as to prevent omission of the active material from the outside of the positive electrodes. A battery was fabricated by inserting the integrated electrodes into a cell made of polyvinyl chloride and pouring a 28 % aqueous KOH solution as an electrolyte solution into the cell.

The resulting battery was subjected to charge/discharge cycles under conditions of a charging rate of 0.25 C, discharging rate of 0.25 C, an amount of charge electric variable corresponding to 135 % of the negative electrode capacity and the voltage of discharge terminated is -650 mV 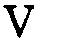 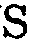 Hg/HgO. The charge/discharge cycles were repeated to until the battery showed a maximum discharge capacity, where one charge and discharge cycle is counted as one charge/discharge.

Table 3 shows the maximum discharge capacity obtained by the procedure set forth above, as well as the number of charge/discharge cycles as a measure evaluating the initial activation, at which the discharge capacity is 97 % of the maximum discharge capacity.

### (2) Evaluation of high electric discharge characteristics (high out-put characteristics)

In order to evaluate high electric discharge characteristics of the alloys 1 though 21 of the present invention and the conventional alloy, a battery which these alloys were built in as negative electrodes and initial activation was already done were prepared. After charging with rate of 0.25C to 135 % of maximum capacity of discharge, a necessary time of discharge that the negative electrode voltage was lowered to -650 mV 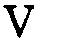 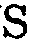 Hg/HgO ( i.e.10 C discharge capacity) were measured when discharging rate is 40 times faster than the charging rate (i.e.10 C). These results are also shown in Table 3.

### Advantages

Results set forth in Table 1 through 3 evidently demonstrate that each alloys 1 through 21 of the present invention exhibits a similar excellent initial activation characteristic to the conventional alloy by rare earth element hydride which dispersively distributed in a matrix having a CaCu₅-type crystal structure and higher electric discharge characteristics ( higher out-put characteristics) than that of the conventional alloy by a phase having a Ce₂Ni₇-type crystal structure which also dispersively distributed in said matrix.

As described above, since the hydrogen occluding alloy in accordance with the present invention exhibits significantly high electric discharge characteristics, when it is used as a negative electrode in a battery, it is possible to apply a battery of various mechanical apparatuses being demanded high out-put.

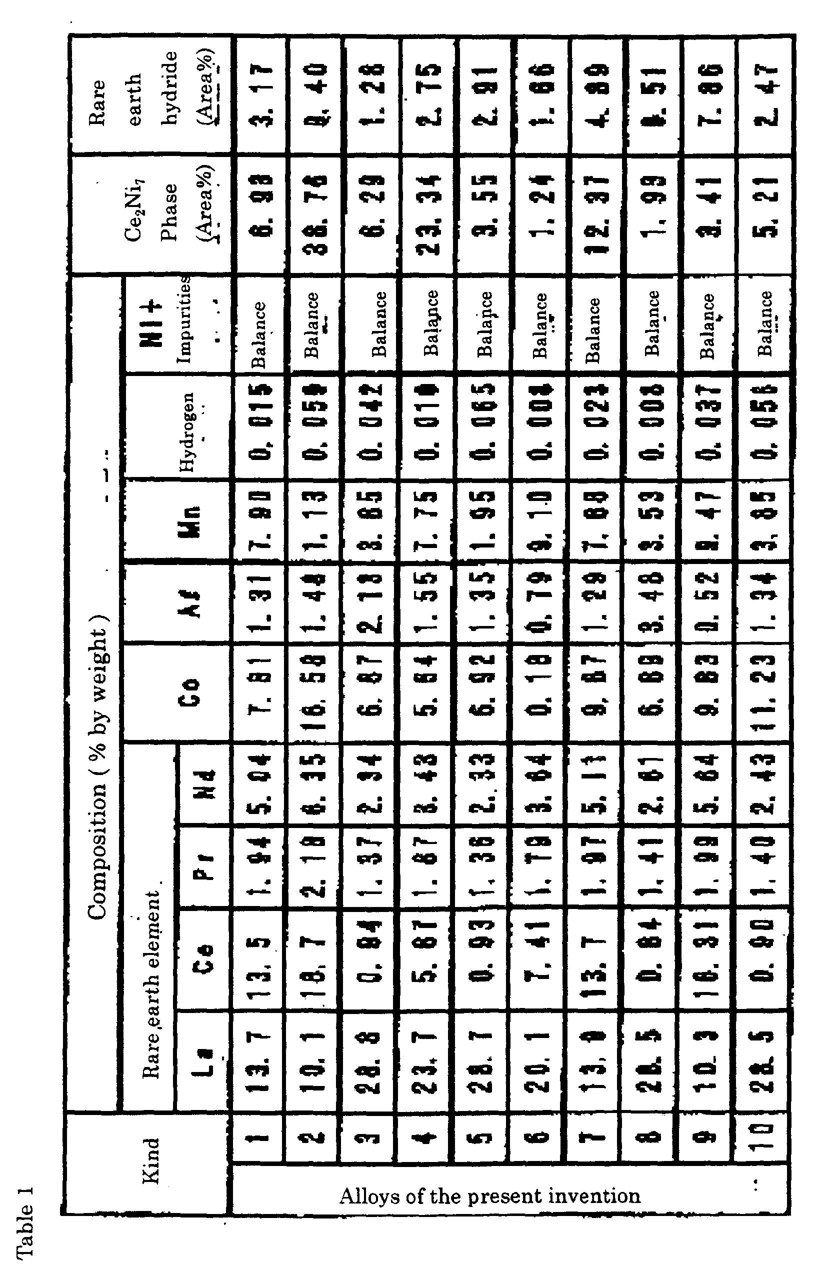

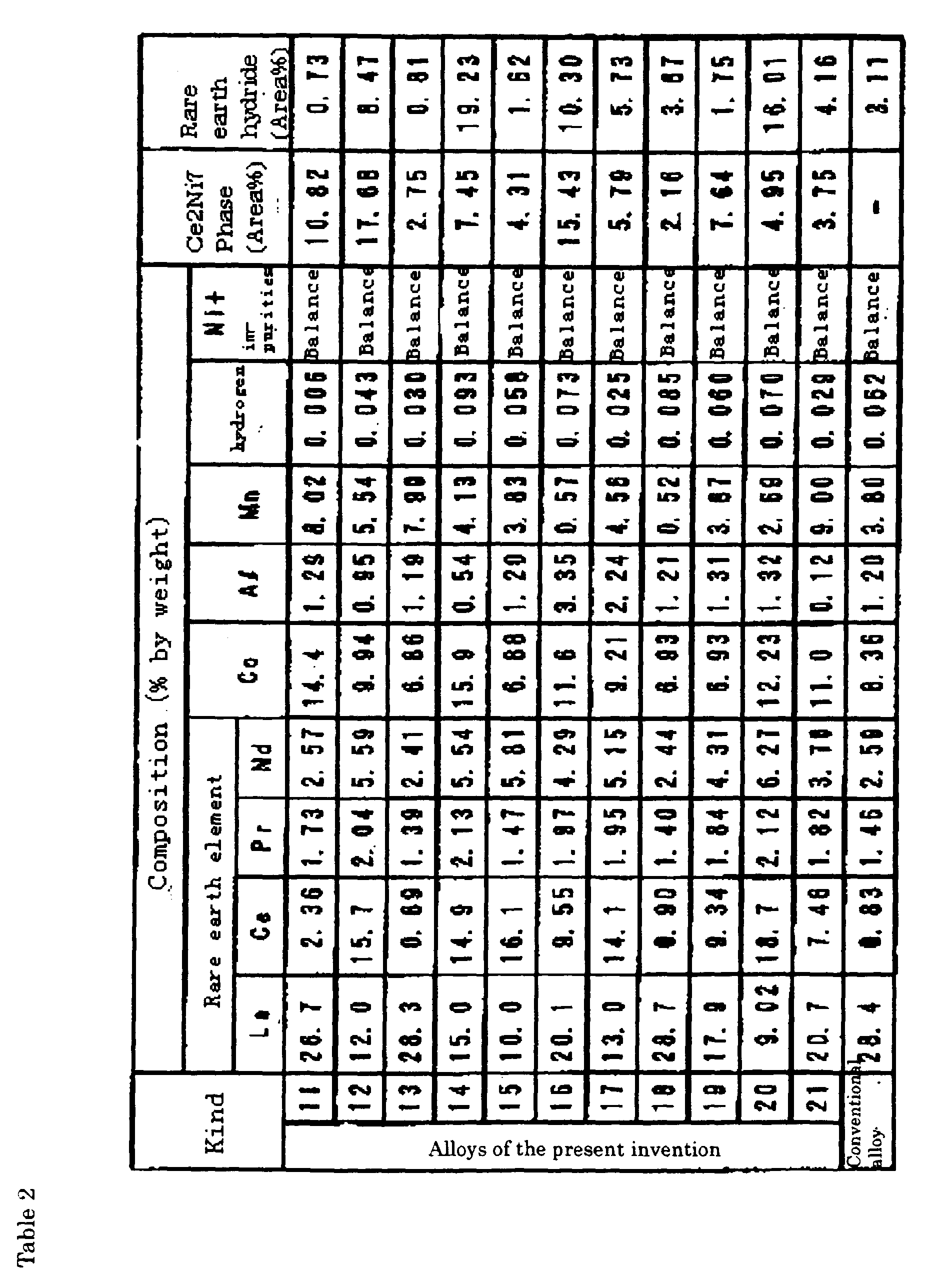

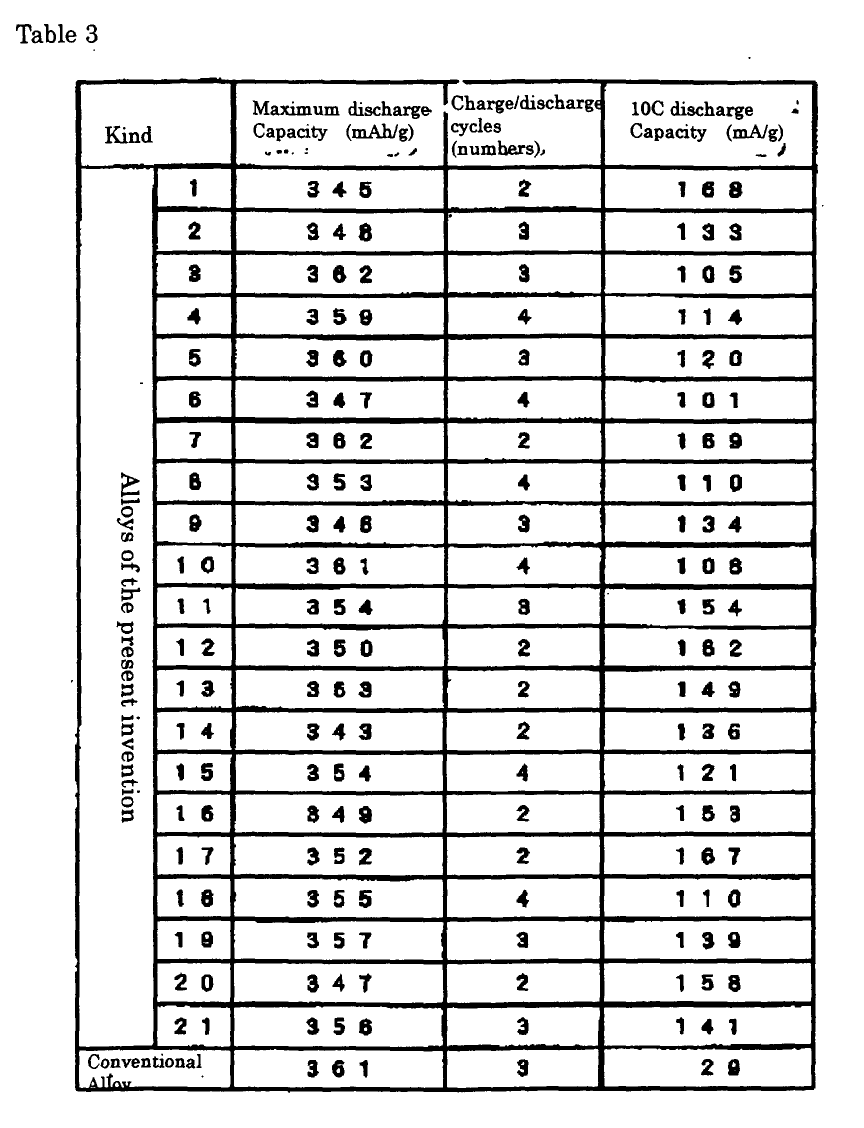

## Claims

1. A Ni based hydrogen occluding alloy having a composition comprising, by weight, 32 to 38% of rare earth elements essentially La and/or Ce,
0.1 to 17% Co,
0.1 to 3.5% Al,
0.5 to 10% Mn,
0.005 to 0.1% of hydrogen, and
the balance being Ni and unavoidable impurities,
wherein said alloy has a microstructure characterized in that a phase having a Ce₂Ni₇-type crystal structure and rare earth element hydride are dispersively distributed in a matrix having a CaCu₅-type crystal structure and , in a ratio to occupy in the whole organization, a ratio of said phase having a Ce₂Ni₇ type crystal structure is 1 to 40% and that of said rare earth element hydride is 0.5 to 20% by area.
